# NOUVEAU FASCICULE DE BREVET EUROPEEN

(11) **EP 3 301 491 B3**
(45) Date de publication du présent fascicule: **21.06.2023**
(45) Mention de la délivrance du brevet: 04.12.2019
(21) Numéro de dépôt: 17195771.5
(22) Date de dépôt: 20.12.2013
(51) Int. Cl.: G02B 6/44, G02B 6/38

(54) **MODULE DE CONNEXION OPTIQUE**
OPTISCHES VERBINDUNGSMODUL
OPTICAL CONNECTION MODULE

(30) Priorité: 11.01.2013 FR 1350261; 11.01.2013 FR 1350260
(43) Date de publication de la demande: 04.04.2018
(62) Demande divisionnaire de: 13198702.6
(73) Titulaire: Nexans, 92400 Courbevoie (FR)
(72) Inventeur: APERE, Rodolphe, 78570 Andresy (FR); AMROUNI, Hamid, 95100 Argenteuil (FR); TRONCONI, Giovanni, 75016 Paris (FR); MONATLIK, Jean-Christophe, 92150 Suresnes (FR)
(74) Mandataire: Ipsilon

(56) Documents cités:
- US-A- 5 708 751
- US-A- 5 737 475
- US-A1- 2002 125 800
- US-A1- 2004 240 826
- US-A1- 2010 310 221
- US-A1- 2012 093 473

## Description

La présente invention a pour objet un module de connexion optique. Le module peut notamment être utilisé dans les réseaux FTTH et dans les points de mutualisation immeuble. L'invention concerne également un dispositif modulaire de connexion optique.

Un réseau FTTH est un réseau de télécommunication dont la partie terminale arrivant chez l'utilisateur est constituée de fibres optiques. FTTH est l'abréviation du terme anglais « Fiber To The Home », signifiant littéralement en français « fibre jusqu'au foyer ». Il s'agit du nom d'une technologie visant à remplacer les technologies DSL (Digital Subscriber Line en langue anglaise).

Le point de mutualisation, ou point de flexibilité, est, sur un réseau FTTH mutualisable, l'endroit où s'effectue la connexion entre les fibres optiques des différents utilisateurs et celles des différents opérateurs. Cette connexion est typiquement un brassage réalisé à l'aide de cordons de raccordement également appelés jarretières. Le point de mutualisation peut être situé plus ou moins loin des logements qu'il dessert. Il peut s'agir d'un boîtier situé en pied d'immeuble, ou d'une armoire de rue.

L'emplacement du point de mutualisation est fonction de données techniques (capacité de passages de fibres) ou commerciales (densité). Ainsi, en zone urbaine dense le point de mutualisation sera proche de l'immeuble qu'il dessert alors qu'en zone pavillonnaire un point de mutualisation peut desservir un quartier entier.

Dans les réseaux FTTH, l'utilisateur peut choisir parmi différents opérateurs. Il existe principalement deux façons d'y parvenir.

Soit l'utilisateur possède plusieurs fibres, et il peut alors choisir la fibre correspondant à l'opérateur souhaité. Soit il n'y a qu'une fibre, et le dispositif de connexion de fibres optiques doit permettre aux différents opérateurs de se connecter à cette unique fibre. Les opérateurs supplémentaires peuvent arriver tardivement par rapport à l'installation d'origine et il convient de pouvoir distribuer les fibres optiques issues de ces nouveaux opérateurs. On utilise dans ce cas un module de connexion par opérateur, ainsi qu'un module d'utilisateurs, et la connexion est réalisée entre le module de l'opérateur et le module d'utilisateurs à l'aide d'un cordon de raccordement ou jarretière.

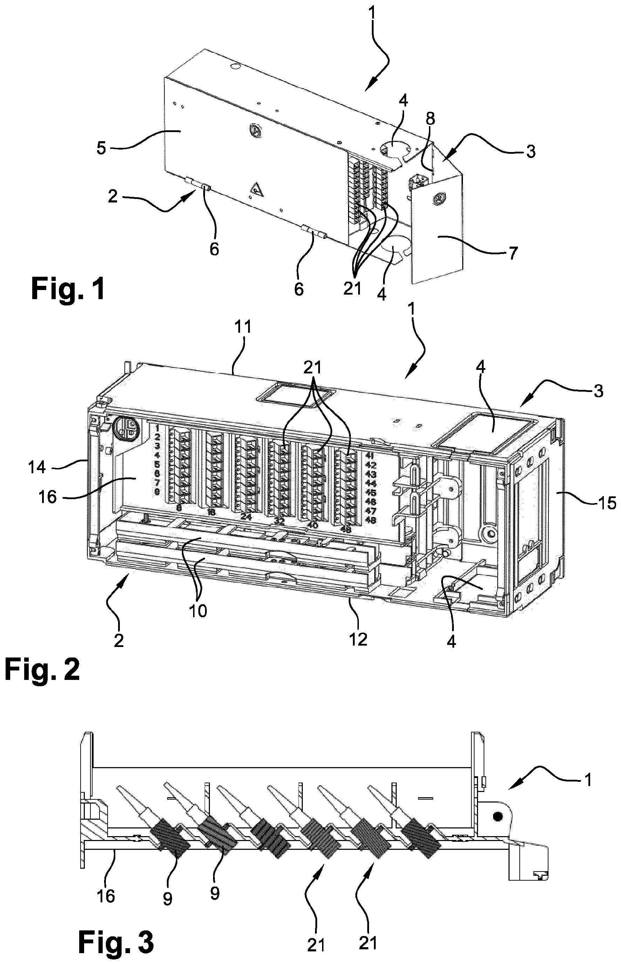

Un tel module de l'état de la technique, qu'il soit un module d'opérateur ou un module d'utilisateurs, est illustré à la figure 1. Le module 1 est un boîtier de forme parallélépipédique. Le module 1 comprend une zone de raccordement 2 d'un ensemble de fibres optiques, issues en général d'un câble, et destinée à l'opérateur ou aux utilisateurs. Dans la zone de raccordement 2, la face arrière des connecteurs 21, non représentée, est destinée à raccorder au module 1 les fibres issues du câble. La face avant des connecteurs 21, disposée sur le côté droit, est destinée à connecter les fibres issues du câble à un autre module, à l'aide d'une jarretière ou d'un cordon de raccordement. Le module 1 comprend également une zone de câblage 3, permettant un passage vertical des jarretières depuis les modules d'opérateur jusqu'au module d'utilisateurs. La zone de câblage 3 est accessible à tous et est distincte de la zone de connexion 2. La zone de câblage 3 comprend deux ouvertures 4 de câblage disposées en bas et en haut du module 1 et qui forment une cheminée de câblage traversant les différents modules.

La zone de raccordement 2 et la zone de câblage 3 devant être sécurisées, le module 1 comprend en face avant une première porte 5, destinée à fermer la zone de connexion 2, et articulée par une première charnière 6, et une deuxième porte 7, destinée à fermer la zone de câblage 3, et articulée par une deuxième charnière 8. Chaque porte 5,7 est verrouillée individuellement par une serrure.

Ce type de module a pour inconvénient que de nombreuses jarretières sont présentes dans la cheminée de câblage. Les connecteurs sont en outre difficiles d'accès et il y a un risque d'endommagement des différentes connexions et une mauvaise protection du module contre la poussière.

US2012/093473 décrit un module selon le préambule de la revendication 1.

La présente invention vise à remédier à ces inconvénients.

L'invention a ainsi pour objet un module de connexion optique, de forme parallélépipédique, comprenant un corps de module renfermant :
- une zone de raccordement, munie de connecteurs permettant de connecter des fibres optiques issues d'un ensemble de fibres optiques à des cordons de raccordement destinés à relier ledit module à d'autres modules de connexion optique, et
- une zone d'acheminement desdits cordons, permettant un passage vertical des cordons à travers le module.

Dans le module selon l'invention, la zone de raccordement et la zone d'acheminement sont deux zones distinctes et alignées horizontalement, les connecteurs étant disposés dans un même plan vertical (ledit plan étant parallèle à la direction d'alignement de la zone de raccordement et de la zone d'acheminement), de manière à ce qu'un utilisateur puisse accéder directement aux connecteurs sans passer par la zone d'acheminement.

Ainsi, la zone de raccordement et la zone d'acheminement de cordons forment à l'intérieur du boîtier deux zones (cavités) disposées côte à côte, et non l'une derrière l'autre comme dans le module de l'état de la technique, ce qui permet à l'utilisateur d'accéder de face aux deux zones indépendamment l'une de l'autre.

Le module comprend une face avant d'accès au module, une face arrière réunie à la face avant par une face inférieure, une face supérieure et deux faces latérales, les connecteurs étant disposés dans un plan parallèle à la face avant, de manière à ce que les connecteurs et la zone d'acheminement apparaissent côte à côte à l'utilisateur accédant au module depuis la face avant.

Les connecteurs comprennent en outre des raccords de forme allongée et dont l'axe longitudinal est incliné par rapport audit plan.

L'angle d'inclinaison entre les raccords et ledit plan peut être compris entre 40 et 50°.

La zone d'acheminement peut comprendre une ouverture formée dans la face inférieure et une ouverture formée dans la face supérieure.

Le module comprend en outre au moins une zone de gestion de surlongueur de fibres optiques.

Avantageusement, ladite au moins une zone de gestion de surlongueur de fibres optiques est un bac clipsable disposé en partie inférieure de la zone de raccordement.

Le module comprend avantageusement un volet mobile constituant en position fermée une face du module et destiné à obturer la zone de raccordement et la zone d'acheminement, ledit volet étant relié au corps de module à l'aide d'une unique charnière, et le volet peut comprendre deux parties reliées entre elles par une charnière, une première partie étant destinée à recouvrir la zone de raccordement et une deuxième partie étant destinée à recouvrir la zone d'acheminement.

Ainsi, l'utilisation d'un volet unique permet d'accéder facilement au deux zones du module et de ne pas augmenter les dimensions du module lorsque le volet est ouvert.

La charnière reliant le volet au corps de module peut être réalisée entre le corps de module et la première partie destinée à recouvrir la zone de raccordement.

Le module peut comprendre des moyens de verrouillage du volet en position fermée.

La zone de raccordement peut comprendre des connecteurs aptes à connecter les fibres optiques issues de l'ensemble de fibres optiques à des cordons de raccordement destinés à être connectés à un autre module.

Le module peut être module d'utilisateurs, destiné à connecter des fibres optiques d'utilisateur à au moins un module d'opérateur.

Le module peut être un module d'opérateur, destiné à connecter des fibres optiques d'un opérateur à un module d'utilisateurs.

La zone d'acheminement peut comprendre deux ouvertures, par exemple disposées dans une paroi inférieure et dans une paroi supérieure du corps de module, et permettant le passage de fibres optiques vers d'autres modules.

L'invention a également pour objet un dispositif modulaire de connexion optique. Le dispositif comprend une pluralité de modules décrits ci-dessus, les modules étant empilés verticalement les uns au-dessus des autres, de sorte que l'empilement des zones d'acheminent de cordons forme un conduit vertical d'acheminement de cordons.

Le dispositif peut comprendre des cordons de raccordement, destinés à connecter entre eux les connecteurs de différents modules, les cordons de raccordement passant dans le conduit vertical d'acheminement.

Le dispositif peut comprendre un module d'utilisateurs et plusieurs modules d'opérateurs.

Le module d'utilisateurs est typiquement disposé à l'extrémité supérieure du dispositif.

D'autres caractéristiques et avantages de la présente invention apparaîtront plus clairement à la lecture de la description suivante donnée à titre d'exemple illustratif et non limitatif et faite en référence aux dessins annexés sur lesquels :
- la figure 1, déjà décrite, illustre un module de connexion optique de l'état de la technique,
- la figure 2 est une vue de face d'un module de connexion optique selon l'invention,
- la figure 3 est une vue de dessus du module selon l'invention, et
- la figure 4 illustre un module selon l'invention muni d'un volet spécifique.

Tel qu'illustré à la figure 2, sur laquelle les éléments identiques à ceux de la figure 1 portent les mêmes références, un module 1 de connexion selon l'invention comprend une zone de raccordement 2 (ou zone de connexion optique) et une zone de câblage 3 adjacente à la zone de raccordement 2. Le module 1 est un boîtier, par exemple parallélépipédique, comprenant une face avant rectangulaire permettant d'accéder à l'intérieur du boîtier, par exemple une face amovible comme un volet, non représentée pour montrer l'intérieur du boîtier, une face arrière 11, la face avant et la face arrière 11 étant reliées par une face inférieure 12, une face supérieure 13 et deux faces latérales 14,15, dont une face latérale gauche 14 et une face latérale droite 15.

Le module 1 peut être un module d'utilisateurs ou un module d'opérateurs. Le module d'utilisateurs et les modules d'opérateurs sont destinés à être empilés verticalement les uns au-dessus des autres. L'empilement des zones de raccordement 3 forme une cheminée de câblage dans laquelle transitent les cordons de raccordement ou jarretières reliant chacun un module d'opérateur au module d'utilisateurs.

Le module 1 est illustré en configuration opérationnelle, le module 1 étant disposé horizontalement dans le sens de la longueur. La zone de câblage 3, destinée au passage des jarretières à travers les différents modules, comprend deux ouvertures 4 de câblage disposées dans la face inférieure 12 et dans la face supérieure 13 respectivement, et qui forment une cheminée de câblage verticale.

Les connecteurs 21 du module 1 sont disposés sur une paroi verticale 16 qui est parallèle à la face avant et à la face arrière 11, de sorte que les connecteurs 21 font face à l'utilisateur. Contrairement au module de l'état de la technique illustré à la figure 1, dans lequel les connecteurs 21 sont disposés latéralement, dans un plan orthogonal à la face avant du module 1, cette disposition face à l'utilisateur permet un bon accès aux connecteurs en combinant une facilité visuelle et une bonne ergonomie. En outre, l'extrémité des jarretières ou cordons de raccordement reliée aux contacts 21 se situe dans la zone de raccordement 2, et non dans la cheminée de câblage 3, ce qui désengorge cette dernière.

Tel qu'illustré à la figure 3, les connecteurs 21 comprennent des raccords 9 inclinés par rapport à la paroi verticale 16. La face arrière des raccords 9 permet de connecter au module 1 des fibres issues d'un câble d'acheminement de fibres. La face avant des raccords 9 permet de connecter la face arrière à une jarretière reliée à son autre extrémité à un connecteur d'un autre module. L'inclinaison des raccords 9 permet de gérer le brassage dans un espace de profondeur réduite tout en respectant les rayons de courbure souhaitables des fibres. L'angle d'inclinaison entre l'axe longitudinal des raccords 9 et la paroi verticale 16 est idéalement de 45°, et peut être compris entre 40 et 50°, voire entre 35 et 55°.

Le module 1 comprend en outre des zones 10 de gestion des surlongueurs des fibres. Les zones de gestion peuvent être des bacs 10 clipsables, disposés par exemple dans la zone de raccordement 2, et notamment en partie inférieure.

Le module 1 peut être un module d'utilisateurs ou un module d'opérateurs. Le module d'utilisateurs et les modules d'opérateurs sont destinés à être empilés verticalement les uns au-dessus des autres. L'empilement des zones de raccordement 3 forme une cheminée de câblage dans laquelle transitent les jarretières reliant chacune un module d'opérateur au module d'utilisateurs.

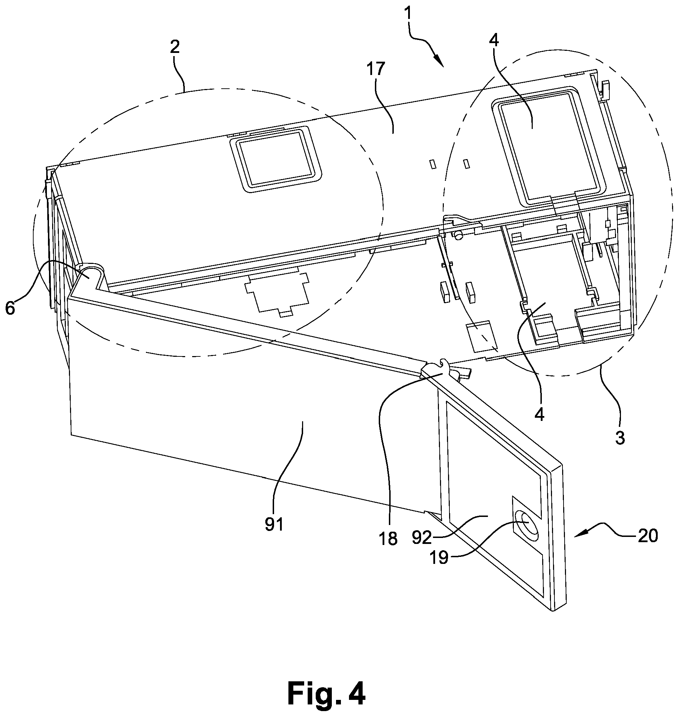

Tel qu'illustré à la figure 4, sur laquelle les éléments identiques à ceux des figure 1 à 3 portent les mêmes références, le module 1 de connexion selon l'invention est un boîtier qui peut comprendre un volet (ou porte) mobile 20, destiné à obturer et désobturer un corps 17 de module, et en particulier la zone de raccordement 2 (la zone de connexion) et la zone de câblage 3 (la zone de gestion de fibres optiques).

Le volet 20, qui est représenté à la figure 2 en position ouverte, est relié au corps 17 du module 1 par une unique charnière 6, disposée par exemple sur une arête du corps de module 17. Le volet 20 comprend deux parties 91,92. Une première partie 91 permet de recouvrir la zone de raccordement 2 tandis qu'une deuxième partie 92 permet de recouvrir la zone de câblage 3. Les deux parties 91,92 du volet 20 sont reliées par une charnière 18, ce qui permet une articulation indépendante des deux parties 91,92 du volet 20. Le volet 20 est verrouillé par une unique serrure 19 disposée sur la deuxième partie 92 du volet 20. En position fermée, le volet 20 recouvre complètement le corps de module 17.

La présence du volet 20 apporte ainsi de nombreux avantages par rapport au module de l'état de la technique illustré à la figure 1, qui a pour inconvénient d'être coûteux, du fait de l'utilisation de deux charnières 6,8 et de deux points de verrouillage et dans lequel il est en outre difficile d'accéder aux connecteurs 21, du fait de l'espace réduit. La présence du volet 20 spécifique permet au contraire un bon niveau de protection aux deux zones séparées que sont la zone de raccordement 2 et la zone de câblage 3, tout en donnant un confort d'utilisation par un accès total aux deux fonctions principales du module. On économise en outre le coût d'une serrure. Le maintien de la protection contre la poussière des points de branchement pendant l'utilisation de la cheminée de câblage est assuré, et on a une accessibilité élargie pour les fonctions principales du module. Enfin, le volume total nécessaire à l'exploitation du module dans son environnement est réduit, car le volet unique n'a pas de débattement latéral.

## Revendications

1. Module (1) de connexion optique, de forme parallélépipédique, comprenant un corps de module (17) renfermant :
- une zone de raccordement (2) munie de connecteurs (21) permettant de connecter des fibres optiques issues d'un ensemble de fibres optiques à des cordons de raccordement destinés à relier ledit module (1) à d'autres modules de connexion optique, et
- une zone d'acheminement (3) desdits cordons, permettant un passage vertical des cordons à travers le module (1),
le module comprenant une face avant d'accès au module, une face arrière réunie à la face avant par une face inférieure, une face supérieure et deux faces latérales, **caractérisé en ce que** la zone de raccordement (2) et la zone d'acheminement (3) sont deux zones distinctes et alignées horizontalement, les connecteurs (21) étant disposés dans un même plan vertical (16), ledit plan (16) étant parallèle à la direction d'alignement de la zone de raccordement (2) et de la zone d'acheminement (3), de manière à ce qu'un utilisateur puisse accéder directement aux connecteurs (21) sans passer par la zone d'acheminement (3), **en ce que** les connecteurs (21) sont disposés dans un plan (16) parallèle à la face avant, et **en ce que** les connecteurs (21) comprennent des raccords (9) de forme allongée et dont l'axe longitudinal est incliné par rapport audit plan (16) et **en ce que** le module (1) comprend en outre au moins une zone (10) de gestion de surlongueur de fibres optiques.

2. Module (1) selon la revendication 1, **caractérisé en ce que** l'angle d'inclinaison entre les raccords (9) et ledit plan (16) est compris entre 40 et 50°.

3. Module (1) selon l'une des revendications précédentes, **caractérisé en ce que** la zone d'acheminement (3) comprend une ouverture (4) formée dans la face inférieure et une ouverture (4) formée dans la face supérieure.

4. Module selon la revendication 1, 2 ou 3, **caractérisé en ce que** ladite au moins une zone (10) de gestion de surlongueur de fibres optiques est un bac (10) clipsable disposé en partie inférieure de la zone de raccordement.

5. Dispositif modulaire de connexion optique, **caractérisé en ce qu'**il comprend une pluralité de modules (1) selon l'une des revendications 1 à 4, les modules (1) étant empilés verticalement les uns au-dessus des autres, de sorte que l'empilement des zones d'acheminement (3) forme un conduit vertical d'acheminement de cordons.

6. Dispositif selon la revendication 5, **caractérisé en ce qu'**il comprend des cordons de raccordement, destinés à connecter entre eux les connecteurs (21) de différents modules, les cordons de raccordement passant dans le conduit vertical d'acheminement.

7. Dispositif selon la revendication 5 ou 6, **caractérisé en ce qu'**il comprend un module d'utilisateurs et plusieurs modules d'opérateurs.

8. Dispositif selon la revendication 7, **caractérisé en ce que** le module d'utilisateurs est disposé à l'extrémité supérieure du dispositif.

## Patentansprüche

1. Optisches Verbindungsmodul (1) parallelepipeder Form, umfassend einen Modulkörper (17), der Folgendes einschließt:
- einen Anschlussbereich (2), der mit Verbindern (21) ausgestattet ist, die ermöglichen, optische Fasern, die aus einer Einheit von optischen Fasern stammen, mit Anschlusskabeln zu verbinden, die ausgelegt sind, das Modul (1) mit anderen optischen Verbindungsmodulen zu verbinden, und
- einen Führungsbereich (3) der Kabel, der einen vertikalen Durchgang der Kabel durch das Modul (1) ermöglicht,
wobei das Modul eine vordere Seite zum Zugang zum Modul, eine hintere Seite, die mit der vorderen Seite durch eine untere Seite verbunden ist, eine obere Seite und zwei laterale Seiten umfasst, **dadurch gekennzeichnet, dass** der Anschlussbereich (2) und der Führungsbereich (3) zwei verschiedene und horizontal ausgefluchtete Bereiche sind, wobei die Verbinder (21) auf einer gleichen vertikalen Ebene (16) angeordnet sind, wobei die Ebene (16) parallel zur Ausfluchtungsrichtung des Anschlussbereichs (2) und des Führungsbereichs (3) ist, so dass ein Benutzer direkt auf die Verbinder (21) zugreifen kann, ohne durch den Führungsbereich (3) zu müssen, dadurch, dass die Verbinder (21) in einer Ebene (16) angeordnet sind, die parallel zur vorderen Seite ist, und dadurch, dass die Verbinder (21) Anschlüsse (9) mit verlängerter Form umfassen, und wovon die Längsachse mit Bezug auf die Ebene (16) geneigt ist, und dadurch, dass das Modul (1) außerdem mindestens einen Verwaltungsbereich (10) der Überlänge der optischen Fasern umfasst.

2. Modul (1) nach Anspruch 1, **dadurch gekennzeichnet, dass** der Neigungswinkel zwischen den Anschlüssen (9) und der Ebene (16) zwischen 40 und 50° liegt.

3. Modul (1) nach einem der vorhergehenden Ansprüche, **dadurch gekennzeichnet, dass** der Führungsbereich (3) eine Öffnung (4) umfasst, die in der unteren Seite gebildet ist, und eine Öffnung (4), die in der oberen Seite gebildet ist.

4. Modul nach Anspruch 1, 2 oder 3, **dadurch gekennzeichnet, dass** der mindestens eine Verwaltungsbereich (10) der Überlänge der optischen Fasern ein klippsbarer Behälter (10) ist, der im unteren Teil des Anschlussbereichs angeordnet ist.

5. Modulare Vorrichtung zur optischen Verbindung, **dadurch gekennzeichnet, dass** sie eine Vielzahl von Modulen (1) nach einem der Ansprüche 1 bis 4 umfasst, wobei die Module (1) vertikal aufeinander gestapelt sind, so dass die Stapelung der Führungsbereiche (3) einen vertikalen Führungskanal von Kabeln bildet

6. Vorrichtung nach Anspruch 5, **dadurch gekennzeichnet, dass** sie Anschlusskabel umfasst, die ausgelegt sind, um die Verbinder (21) von verschiedenen Modulen miteinander zu verbinden, wobei die Anschlusskabel im vertikalen Führungskanal verlaufen.

7. Vorrichtung nach Anspruch 5 oder 6, **dadurch gekennzeichnet, dass** sie ein Benutzermodul und mehrere Bedienermodule umfasst.

8. Vorrichtung nach Anspruch 7, **dadurch gekennzeichnet, dass** das Benutzermodul am oberen Ende der Vorrichtung angeordnet ist.

## Claims

1. An optical connection module (1), of parallelepipedal shape, comprising a module body (17) containing:
- a coupling area (2) provided with connectors (21) making it possible to connect optical fibers coming from a set of optical fibers with coupling cords intended to link said module (1) to other optical connection modules, and
- a passage area (3) of said cords, allowing a vertical passage of the cords through the module (1),
the module comprising a front face for access to the module, a back face joined to the front face by a lower face, an upper face and two side faces, **characterized in that** the coupling area (2) and the passage area (3) are two separate areas and are horizontally aligned, the connectors (21) being arranged in a same vertical plane (16), said plane (16) being parallel to the direction of alignment of the coupling area (2) and the passage area (3), such that a user can access the connectors (21) directly without passing through the passage area (3), **in that** the connectors (21) are arranged in a plane (16) parallel to the front face, and **in that** the connectors (21) comprise couplers (9) with an elongate shape and the longitudinal axis of which is inclined relative to said plane (16), and **in that** the module (1) further comprises at least one area (10) for managing excess optical fiber lengths.

2. The module (1) according to claim 1, **characterized in that** the incline angle between the couplers (9) and said plane (16) is between 40 and 50°.

3. The module (1) according to one of the preceding claims, **characterized in that** the passage area (3) comprises an opening (4) formed in the lower face and an opening (4) formed in the upper face.

4. The module according to claim 1, 2 or 3, **characterized in that** said at least one area (10) for managing excess optical fiber lengths is a tray (10) that is able to be clipped and is arranged in the lower part of the coupling area (2).

5. A modular optical connection device, **characterized in that** it comprises a plurality of modules (1) according to one of claims 1 to 4, the modules (1) being stacked vertically one above the other, such that the stack of passage areas (3) forms a vertical conduit for the passage of cords.

6. The device according to claim 5, **characterized in that** it comprises coupling cords, intended to connect the connectors (21) of different modules to one another, the coupling cords passing in the vertical passage conduit.

7. The device according to claim 5 or 6, **characterized in that** it comprises a user module and several operator modules.

8. The device according to claim 7, **characterized in that** the user module is arranged at the upper end of the device.
